# EUROPEAN PATENT APPLICATION

(11) **EP 2 031 915 A1**
(43) Date of publication of application: **04.03.2009**
(21) Application number: 07017140.0
(22) Date of filing: 31.08.2007
(51) Int. Cl.: H04W 8/04

(54) **A method for implementing a parallel network attachment functionality for a user device in a mobile telecommunications system**

(71) Applicant: SIEMENS AKTIENGESELLSCHAFT, 80333 München (DE)
(72) Inventor: Görg, Carmelita, Prof., 28357 Bremen (DE); Kuladinithi, Koojana, 28357 Bremen (DE); Pangboonyanon, Varaporn, 28195 Bremen (DE); Pittmann, Frank, 12099 Berlin (DE)

(57) **Abstract**

Method for implementing a parallel network attachment functionality to at least two mobile access networks for a user device (UE), wherein the home subscriber entity (HSS) transfers data to the attachment decision entity (ISADF), the data concerning the authorisation and the control of the parallel network attachment of the user device (UE); and in case that a parallel network attachment is allowed for the user device (UE) according to the data transferred in step d), the attachment decision entity (ISADF) sends a message confirming the registration.

## Description

The invention refers to a method for implementing a parallel network attachment functionality for a user device in a mobile telecommunications system and a method for performing a parallel network attachment of the user device to several mobile access networks. Furthermore, the invention relates to a mobile telecommunications system being capable to perform the aforementioned methods.

Future mobile telecommunications systems will support a high number of heterogeneous access technologies in the form of mobile access networks. In the current 3GPP standardization (see for example Technical Report 3GPP TR 23.882, 3GPP System Architecture Evolution: Report on Technical Options and Conclusions, V0.11.0 (2006-02)), new 3GPP LTE/SAE access technologies (LTE = Long Term Evaluation, SAE = System Architecture Evolution) are discussed and there is a need that those new access technologies interact with 3GPP legacy networks like GSM and UMTS (GSM = Global System for Mobile Telecommunication, UMTS = Universal Mobile Telecommunications System).

There are proposals enabling an access system change of a user device/user equipment between different access technologies by providing connectivity during a data transmission session. However, there are no solutions available for a parallel network attachment of a user device simultaneously to more than one mobile access network. Such a parallel network attachment would be helpful for the user of a user equipment in many situations. E.g., a user equipment enabling parallel network attachment may provide the user the functionality of performing a telephone call via a 3GPP access network and simultaneously downloading information via a WLAN network.

Therefore, it is an object of the invention to provide a method in a mobile telecommunications system enabling parallel network attachment to several mobile access networks.

This object is solved by the independent claims. Preferred embodiments of invention are defined in the dependent claims.

The first aspect of the invention refers to a method for implementing a parallel network attachment functionality for a user device in a mobile telecommunications systems. The parallel network attachment functionality enables a simultaneous attachment of the user device to at least two mobile access networks comprising a first mobile access network connected via a first access gateway to a core network and a second mobile access network connected via a second access gateway to the core network. The network attachment functionality is implemented upon the first attachment of the user device to the first mobile access network. First network attachment means that there is no bearer service existing for the user device via the first mobile access network. According to the invention, during the first network attachment, the following steps are performed:

In a step a), the user device requests an attachment to the first mobile access network. In a step b), the first local attachment entity registers as a serving local attachment entity for the user device in an attachment decision entity located in the core network. The first local attachment entity and the attachment decision entity are new components which are not known from the prior art and enable the implementation of the parallel network functionality. In a step c), the attachment decision entity registers as a serving attachment decision entity for the user device in a home subscriber entity managing the subscriber data of the user device. In a step d), the home subscriber entity transfers data to the attachment decision entity, the data concerning the authorisation and the control of the parallel network attachment of the user device.

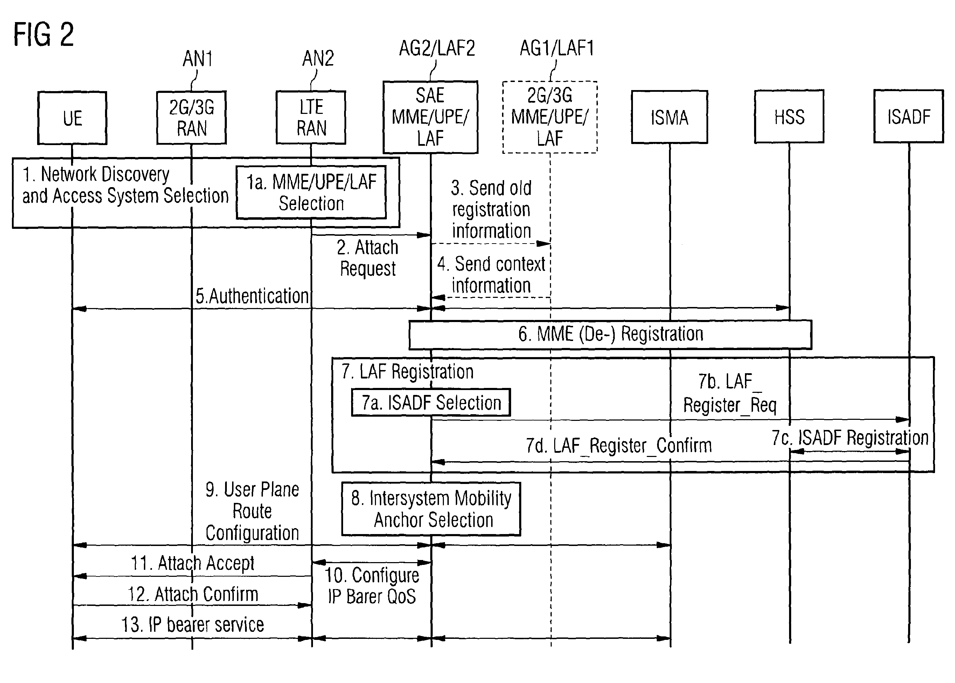

In step e), in case that a parallel network attachment is allowed for the user device according to the data transferred in step d), the attachment decision entity sends a message confirming the registration of the first local attachment entity performed in step b) to the first local attachment entity. As a consequence, the first local attachment entity is registered in the attachment decision entity for handling a parallel network attachment and the attachment decision entity is registered in the home subscriber entity for handling a parallel network attachment. Finally, in step f), a bearer service between the user device and the core network is established enabling the communication of the user device via the first mobile access network to which the user device is now attached. Step f) is performed by standard methods known from the prior art, particularly by performing steps 9 to 13 as describes with respect to Fig. 2 in the detailed description.

The aforementioned steps a) to f) do not have to be performed in alphabetic order. The steps may be switched as long as one step does not refer to another step or to the result of another step described before. However, the performance in alphabetic order is the preferred implementation of the above method.

In a preferred embodiment of the above described method, step a) includes the following steps:
- the user device discovers the first mobile access network and selects the first access gateway and the first local attachment entity for network attachment;
- the user device sends a network attachment request to the first mobile access network which forwards the network attachment request to the first access gateway and the first local attachment entity.

According to this embodiment, a network attachment request is communicated to both the first access gateway and the first local attachment entity.

In another embodiment, the method of the invention includes the step that the user device is authenticated in the first access gateway and in the first local attachment entity. This step is preferably performed after step a), but before step b).

According to another embodiment of the invention, the method includes the following step:
- the first access gateway and the first local attachment entity register as serving the user device in the home subscriber entity.

This step is preferably performed before step b) as defined above and after the above described authentication of the user device. However, the step referring to the registration of the first access gateway and the first local attachment entity in the home subscriber entity may also be performed at a later stage, e.g. after steps b), c), d) or e).

In another embodiment of the method according to the invention, in case that a parallel network attachment is not allowed for the user device according to the data transferred in step d), the attachment decision entity sends in step e) a message refusing the registration of the first local attachment entity performed in step b) to the first local attachment entity. According to this embodiment, the local attachment entity will be informed about the fact that a parallel network attachment is not possible for the user device due to the policy and information stored in the home subscriber entity.

In another embodiment of the invention, the mobile telecommunications system includes a mobility anchor in the core network for enabling a change of the user device during data transmission from a former mobile access network to a new mobile access network, wherein the first network attachment of the user device refers to such change. The use of a mobility anchor is known from the prior art and will not be described in detail herein. In case that the system including such a mobility anchor is used, the bearer service is established in step f) between the user device and the mobility anchor of the core network.

In a preferred embodiment, in which the first network attachment refers to the change of the user device during data transmission from a former mobile access network to a new mobile access network by using the mobility anchor, step a) may be performed as follows:
Upon an attachment request of the user device to the first mobile access network being the new access network, the first local attachment entity requests and receives context information including the identity of the attachment decision entity from the access gateway and the network attachment entity of the former access network. As a consequence, the identity of the attachment decision entity is known in the new attachment process. Hence, the attachment decision entity according to this identity in the context information is preferably used for registration in step b). Nevertheless, in step b), an attachment decision entity according to predefined information in the user device may alternatively be used for registration.

In a further embodiment of the invention, the first local attachment entity and the attachment decision entity communicate via a so-called reference point which is a conceptual point dividing functional groups. In a specific realisation, this reference point corresponds to a physical interface between the first local attachment entity and the attachment decision entity.

The above described method may be performed in a mobile telecommunications system wherein the first and/or the second mobile access networks are 3GPP networks. The 3GPP networks may comprise a GSM access network and/or a UMTS access network and/or the newly developed SAE/LTE access network. Furthermore, the first and/or the second mobile access networks may be non 3GPP access networks, such as an interworking WLAN network.

Besides the above described method, the invention also refers to a method for performing a parallel network attachment of a user device to several mobile access networks, wherein the parallel network attachment functionality is implemented according to the above described method. During the network attachment of the user device to the second mobile access network the following steps are performed:
In a step i), the user device having an established bearer service via the first mobile access network requests a parallel network attachment to the second mobile access network. In a step ii), the second access gateway and a second local attachment entity assigned to the second mobile access network request and receive context information including the identity of the serving attachment decision entity (being registered in step c) of the above described method) from the first access gateway and the first local attachment entity.
In a step iii), the second local attachment entity sends a parallel network attachment request to the serving attachment decision entity for the user device. In a step iv), the serving attachment decision entity requests an authorisation for a parallel network attachment from the home subscriber entity of the user device.
In a step v), in case that an authorization for the parallel network attachment is given in response to the request in step iv), the serving attachment decision entity sends a message confirming the parallel network attachment request sent by the second local attachment entity in step iii) to the second local attachment entity. Thereafter, in step vi), a parallel bearer service between the user device and the core network is established via the second mobile access network, the second access gateway and the second local attachment entity.

The above described steps i) to vi) need not to be performed in numerical order. The steps may be switched as long as one step does not depend from a preceding step or a result of a preceding step. However, performing the steps in numerical order is a preferred implementation of the method.

In a preferred embodiment of the above described parallel network attachment method, step i) includes the following steps:
- the user device discovers the second mobile access network and selects the second access gateway and the second local attachment entity for parallel network attachment;
- the user device sends a parallel network attachment request to the second mobile access network which forwards the parallel network attachment request to the second access gateway and the second local attachment entity.

In another embodiment of the parallel network attachment method, the following step is performed:
- the user device is authenticated in the second access gateway and in the second local attachment entity.

In a preferred embodiment, the method includes the following step:
- the second access gateway and the second local attachment entity register as serving the user device in the home subscriber entity.

In another embodiment, in case that an authorization for the parallel network attachment is not given in response to the request in step iv), the serving attachment decision entity sends in step v) a message refusing the parallel network attachment request sent by the second local attachment entity in step iii) to the second local attachment entity, whereupon the method is terminated without establishing a parallel network attachment via the second mobile access network.

In another preferred embodiment, the mobile telecommunications system includes a mobility anchor in the core network for enabling a change of the user device during data transmission from a former mobile access network to a new mobile access network, wherein the parallel bearer service is established between the user device and the mobility anchor in the core network.

In another embodiment of the above method, the second local attachment entity and the attachment decision entity communicate via a reference point, particularly via a physical interface.

Besides the above described methods, the invention further refers to a mobile telecommunications system comprising the following components:
- a user device;
- a first mobile access network connected via a first access gateway to a core network;
- a second mobile access network connected via a second access gateway to the core network;
- a first local attachment entity assigned to the first mobile access network;
- a second local attachment entity assigned to the second mobile access network;
- an attachment decision entity located in the core network;
- a home subscriber entity managing the subscriber data of the user device;
- wherein the components of the telecommunications system are adapted such that a method according to one of the preceding claims can be performed in the telecommunications system.

In an preferred embodiment of this telecommunications system, the first and second local attachment entities are adapted to communicate with the attachment decision entity via a reference point, particularly a physical interface.

In another embodiment of the telecommunications system, the first local attachment entity is co-located with the first access gateway and/or the second local attachment entity is co-located with the second access gateway. Co-location means that those entities are positioned at the same physical location in the network. Similarly, the attachment decision entity may be co-located with the home subscriber entity.

In a preferred embodiment of the telecommunications system, the mobile telecommunications system includes the above mentioned mobility anchor in the core network for enabling a change of the user device during data transmission from a former mobile access network to a new mobile access network, wherein the attachment decision entity is preferably co-located with the mobility anchor.

Embodiments of the invention will be described in detail with respect to the accompanying drawings, wherein:
- Fig. 1: shows a schematic view of an embodiment of a mobile telecommunications system having the parallel network attachment functionality according to the invention;
- Fig. 2: shows a message flow describing the implementation of the parallel network attachment functionality accord- ing to one embodiment of the invention; and
- Fig. 3: shows a message flow illustrating the parallel net- work attachment according to one embodiment of the invention.

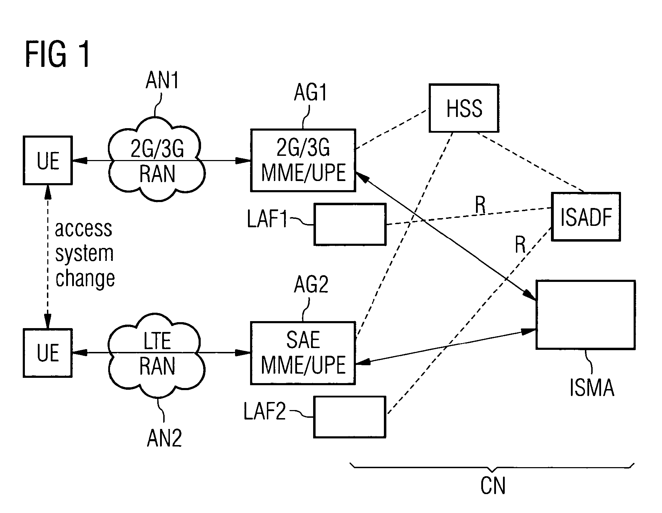

Fig. 1 shows an embodiment of a 3GPP mobile telecommunications system including a core network CN and two access networks AN1 and AN2. The Access network AN1 is a conventional 2G/3G RAN (RAN = Radio Access Network) being connected via a access gateway AG1 to the core network. This access gateway AG1 comprises a 2G/3G MME (MME = Mobility Management Entity) and a 2G/3G UPE (UPE = User Plane Entity). Those entities are well-known for a skilled person and, thus, not described in detail herein. The access network AN2 is a new generation 3GPP network comprising an LTE RAN (LTE = Long Term Evolution; RAN = Radio Access Network). This access network AN2 communicates with the core network via the access gateway AG2 comprising the well-known components SAE MME/UPE (SAE = System Architecture Evolution, MME = Mobility Management Entity, UPE = User Plane Entity).

The network shown in Fig. 1 includes the so-called intersystem mobility anchor ISMA providing the functionality that a user device UE can connect via different heterogeneous mobile access networks with the core network. The architecture described so far is known from the prior art and particularly shown in the Technical Report 3GPP TR 23.882, 3GPP System Architecture Evolution: Report on Technical Options and Conclusions, V0.11.0 (2006-02).

Fig. 1 shows an access system change of the user device UE between the mobile access networks AN1 and AN2. By using the intersystem mobility anchor, such an access system change during data transmission providing seamless continuity of connectivity and services is possible. However, according to the prior art, the user device UE is always attached to only one mobile access network, and parallel network attachment to several access networks, namely to both networks AN1 and AN2, is not supported.

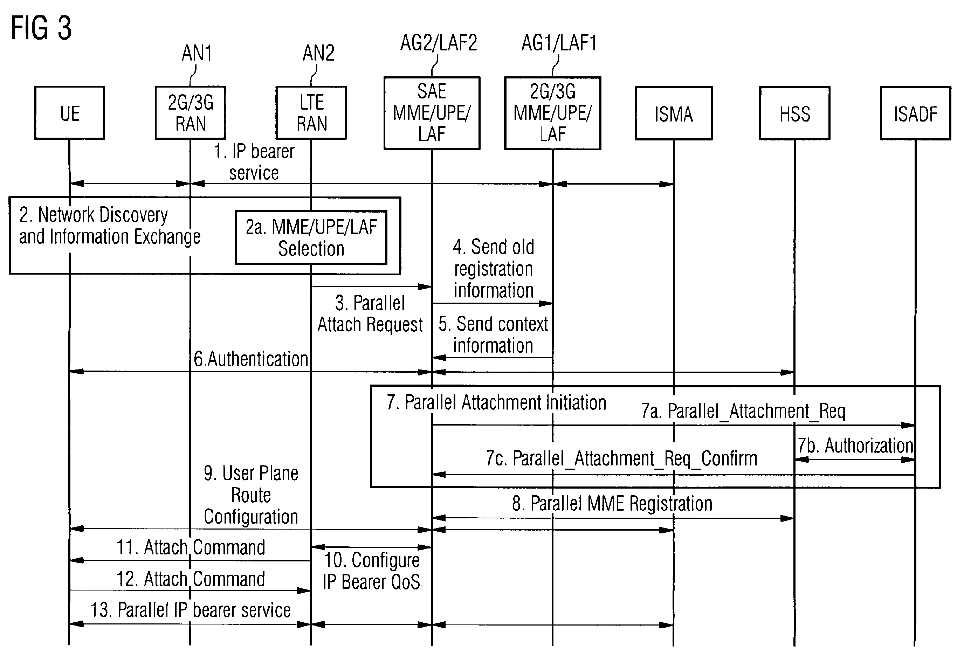

According to the invention, the telecommunications system in Fig. 1 includes as new components so-called local attachment functions in each mobile access network and an intersystem attachment decision function in the core network. The local attachment function for the access network AN1 is designated as LAF1 in Fig. 1 and the local attachment function of the access network AN2 is designated as LAF2 in Fig. 1. Moreover, the intersystem attachment decision function is designated as ISADF in Fig. 1. The local attachment functions are embodiments of the local attachment entities as defined in the claims and the intersystem attachment decision function is an embodiment of the attachment decision entity as defined in the claims. A communication between the local attachment functions and the intersystem attachment decision function takes place via a corresponding reference point designated as R in Fig. 1. Preferably, this reference point is a new physical interface between each local attachment function and the intersystem attachment decision function. Furthermore, the home subscriber system HSS managing the subscriber data of the user device UE and being an embodiment of the home subscriber entity defined in the claims can communicate with the access gateways AG1 and AG2, the local attachment functions LAF1 and LAF2 and the intersystem attachment decision function ISADF. The detailed communications taking place between the components shown in Fig. 1 will be described with respect to Fig. 2 and Fig. 3.

Fig. 2 shows to a message flow referring to the first network attachment of the user device UE to the LTE RAN AN2 shown in Fig. 1. A first network attachment is a network attachment taking place when no IP bearer service exists between the user equipment UE und the core network CN. A first network attachment occurs when the user device UE is switched on and connects to a mobile access network or when an access system change between different access networks occurs, as indicated in Fig. 1.

Fig. 2 refers to a first network attachment wherein the user device UE changes the mobile access network from AN1 to AN2. The network components involved in the message flow in Fig. 2 are the UE, the access network AN1 (also referred to as 2G/3G RAN), the access network AN2 (also referred to as LTE RAN), the access gateway AG1 and the local attachment function LAF1 (also referred to as 2G/3G MME/UPE/LAF), the access gateway AG2 and the local attachment function LAF2 (also referred to as SAE MME/UPE/LAE), the intersystem mobility anchor ISMA, the home subscriber system HSS and the intersystem attachment decision function ISADF.

Fig. 2 shows the registration of the local attachment function LAF2 in order to implement a parallel network attachment functionality wherein a parallel network attachment will be described with respect to Fig. 3.

According to Fig. 2, at the beginning of the registration process, no IP bearer service is established. The UE discovers the SAE/LTE access gateway AG2 and performs access gateway and network selection in step 1 of Fig. 2. In step 1a) the LTE RAN selects the SAE MME/UPE/LAF serving the LTE RAN nodes. In step 2, the LTE RAN forwards an attachment request of the UE to the SAE MME/UPE/LAF.

The following steps 3 and 4 are optional and are only performed in an access system change where a former connection to a mobile access network exists. In step 3, old registration information referring to the former attachment of the UE to the access network AN1 is sent to the 2G/3G MME/UPE/LAF in order to retrieve context information from the 2G/3G MME/UPE/LAF. In step 4, the 2G/3G MME/UPE as well as the 2G/3G LAF send the retrieved context information, e.g. the permanent user identity or the identity of the used intersystem mobility anchor ISMA, to the SAE MME/UPE/LAF. Furthermore, the identity of the used intersystem attachment decision function ISADF is transmitted in step 4.

In subsequent step 5, the UE is authenticated in the SAE MME/UPE/LAF wherein this authentication includes an exchange of messages with the home subscriber system HSS.

In step 6, the SAE MME/UPE/LAF registers itself as serving the UE in the home subscriber system HSS. Thereafter, the user information of the UE in the 2G/3G MME/UPE/LAF is deleted or the user information is marked as not present. Furthermore, the home subscriber system HSS confirms the registration of the SAE MME/UPE/LAF. Subscription data authorizing the default IP access bearer are transferred. Information for policy and charging control or the default IP access bearer is sent to the MME/UPE/LAF.

In subsequent step 7, the SAE/LAF initiates the registration of the LAF for the SAE/LTE access system. Step 7 is divided in 4 substeps 7a to 7d. In step 7a, an intersystem attachment decision function ISADF is selected either by means of the above described retrieved old registration information or by any other means. In substep 7b, the SAE LAF registers itself as serving the UE in the ISADF. Thereafter, in step 7c, the ISADF registers itself as serving the UE in the HSS. Older information is deleted. The HSS confirms the registration of the ISADF. Subscription data authorising the parallel network attachment are transferred. Information for policy and charging control of the parallel network attachment is sent to the ISADF. In step 7d, the ISADF confirms the registration of the SAE LAF.

In step 8, an intersystem mobility anchor ISMA is selected whereupon in step 9 the intersystem mobility anchor configures the IP layer with the predetermined user IP address. The user plane is established and the default policy and charging rules are applied. In step 10, the SAE MME/UPE/LAF provides the LTE RAN with QoS configurations (QoS = Quality of Service) for the default IP access bearer, e.g. with upper limits for transmission data rates. In step 11, the MME/UPE/LAF accepts the network attachment of the user device UE and allocates a temporary identity to the UE. Furthermore, the predetermined user IP address is transferred.

In subsequent step 12, the UE acknowledges the success of the network attachment, whereupon the default IP access bearer is established between the UE and the intersystem mobility anchor ISMA via the mobile access network LTE RAN and the SAE MME/UPE/LAF.

For the registration of the local attachment function LAF1 in case of an access system change from network AN2 to AN1, in principle the same information flow is applicable. The only difference resulting in Fig. 2 is the switching of the components AN1 and AN2 and of the components AG1/LAF1 and AG2/LAF2.

After performing the LAF registration according to Fig. 2, a parallel network attachment may be performed by the UE. This network attachment will be described with respect to Fig. 3 showing a message flow in which the UE has performed a first network attachment to the access network AN1 and now wishes to attach in parallel to the access network AN2.

The components being involved in the message flow of Fig. 3 are the same as the components shown in Fig. 2. In step 1 of Fig. 3, the IP bearer service is already established between the user device UE and the intersystem mobility anchor ISMA via the 2G/3G RAN and the 2G/3G MME/UPE/LAF.

In step 2, the user equipment UE discovers the SAE/LTE access system and starts the parallel network attachment process. To do so, the UE sends to the LTE RAN necessary information including its old registration information, e.g. its temporary identity. In a step 2a, the LTE RAN selects the SAE MME/UPE/LAF serving the LTE RAN nodes. The LTE RAN forwards the parallel attachment request of the UE to the SAE MME/UPE/LAF.

Similarly to steps 3 and 4 shown in Fig. 2, the SAE MME/UPE as well as the SAE LAF retrieves context information from the 2G/3G MME/UPE/LAF by sending its old registration information in step 4 of Fig. 3. In step 5, the 2G/3G MME/UPE as well as the 2G/3G LAF sends the retrieved context information, particularly the permanent user identity and the identity of the used intersystem attachment decision function ISADF, to the SAE LAF. Analogously to step 5 of Fig. 2, the user device UE is authenticated in the SAE MME/UPE/LAF in step 6 of Fig. 3.

In step 7, the SAE LAF initiates the parallel attachment process for the SAE/LTE access system. Step 7 is divided into three substeps 7a to 7c. In step 7a, the SAE LAF sends a parallel attachment request to the ISADF, including its old registration information, e.g. its temporary identity. Step 7b refers to an authorisation step, wherein an authorisation of the subsequent parallel SAE MME/UPE/LAF registration is requested from the HSS based on the available subscription data authorizing the parallel network attachment and the available policies. The authorisation step is confirmed by the HSS. In step 7c, the ISADF confirms the parallel network attachment request of the SAE LAF.

In step 8, the SAE MME/UPE/LAF registers itself as serving in parallel the UE and the HSS. The HSS confirms the registration of the SAE MME/UPE/LAF. Subscription data authorizing the parallel default IP access bearer are transferred. Information for policy and charging control of the parallel default IP access bearer is sent to the SAE MME/UPE/LAF. The user information of the UE in the 2G/3G MME/UPE/LAF is not deleted.

In step 9, the intersystem mobility anchor ISMA configures the IP layer with the determined user IP address. The user plane of the parallel access system is established and the default policy and charging rules are applied. In step 10, the SAE MME/UPE/LAF provides the LTE RAN with QoS configurations for the IP bearer service. In step 11, the LTE RAN commands the UE to attach in parallel to the LTE RAN and allocates a temporary identity to the UE. Furthermore, the predetermined user IP address is transferred.

In step 12, the UE acknowledges the success of the parallel network attachment process. Thereafter, in step 13, the IP bearer service is established between the UE and the intersystem mobility anchor ISMA via the LTE RAN and the SAE MME/UPE/LAF. This service is now in parallel to the existing one via the 2G/3G RAN and the 2G/3G MME/UPE/LAF.

For a parallel network attachment of a 2G/3G access system on the basis on an already established bearer via the LTE RAN, the same information flow of Fig. 3 is applicable. The only difference resulting in Fig. 3 is the switching of the access networks AN1 and AN2 and of the components AG1/LAF1 and AG2/LAF2.

The above described information flow is also applicable for any other mobile access networks than the described networks AN1 and AN2. Particularly, the access networks may be any 3GPP and/or non 3GPP access networks. The only prerequisite is a trusted relationship between the corresponding local attachment functions and the intersystem decision attachment function, whereas the establishment of such a relation is not within the scope of the invention described herein.

Summarized, according to the invention as described herein before, a parallel network attachment is enabled by new functional entities, namely local attachment functions, an intersystem attachment decision function and corresponding reference points between the local attachment functions and the intersystem attachment decision function. During parallel network attachment, the additional IP connectivity of the user device UE is enabled by establishing an IP bearer. The network entities of the above described architecture keep the attachment registration information of the user device UE.

The functions and tasks being performed by the intersystem attachment decision function used in the invention are as follows:

The intersystem attachment decision function communicates with the local attachment functions via the above mentioned reference point. The intersystem attachment decision function hosts the decision engine to finally decide via appropriate policies which parallel network attachment request is allowed. The policies are not within the scope of the invention described herein. Referring to the LAF registration described with respect to Fig. 2, the intersystem attachment decision function confirms or rejects the LAF registration request and starts maintaining a context related to the user device UE. Furthermore, the intersystem attachment decision function registers itself as serving the user device UE in the home subscriber system HSS.

With respect to the parallel network attachment process described with respect to Fig. 3, the intersystem attachment decision function confirms or rejects the parallel network attachment request from a local attachment function based on the available subscription data authorizing the parallel network attachment and based on the available policies. Moreover, the intersystem attachment decision function requests from the home subscriber system HSS an authorization of the subsequent parallel MME/UPE/LAF registration and updates the context related to the user device UE. The context related to the user device UE includes all relevant information, particularly the registered local attachment function or local attachment functions serving the UE, the subscription data authorizing the parallel network attachment and the information for policy and charging control of the parallel network attachment.

In a 3GPP-oriented environment, the intersystem attachment decision function could be co-located with the home subscriber system HSS which is the database of all subscriber and service data which could be extended with attachment information, i.e. with information if and to which access networks a parallel network attachment is allowed. Currently, the parameters stored in the HSS include the user identity, the roaming profile, authentication parameters and service information. The intersystem attachment decision function could also be co-located with the intersystem mobility anchor as shown in Fig. 1. This is because the execution point for a parallel network attachment, i.e. the parallel IP bearer services, could be located in this mobility anchor.

The local attachment function LAF described in the foregoing performs the following functions and tasks:
The local attachment function communicates with the intersystem attachment decision function via the above defined reference point. The LAF authorizes the user device UE for the parallel network attachment process and performs context transfer of registration information between an old and a new LAF. The LAF initiates the parallel network attachment process.

With respect to the LAF registration described in Fig.2, the local attachment function selects the intersystem attachment decision function either by means of retrieved old information or by other means which are not within the scope of the invention described herein. Furthermore, the local attachment function originates the LAF registration request to the intersystem attachment decision function and registers itself as serving the user device UE in the home subscriber system HSS and the intersystem attachment decision function ISADF. Moreover, the local attachment function tries to retrieve context information from a former local attachment function, and, if such information is available, the former LAF sends the context information, e.g. the permanent user identity or the identity of the used intersystem attachment decision function, to the new, requesting local attachment function. In addition, the local attachment function starts maintaining a context related to the user device.

Referring to the parallel network attachment process described with respect to Fig. 3, the local attachment function originates the parallel attachment request to the intersystem attachment decision function ISADF, including its old registration information, e.g. its temporary identity. Furthermore, the local attachment function registers itself as serving in parallel the user device UE in the home subscriber system HSS. Moreover, the local attachment function retrieves context information from the old local attachment function, e.g. the permanent user identity or the identity of the used intersystem attachment decision function. Such context information is sent by the old LAF to the new, requesting LAF. In addition, the local attachment function starts maintaining and updating a context related to the user device UE based on the retrieved old information. The context related to the user device UE includes all relevant information, particularly the serving intersystem decision attachment function and temporary identities.

In a SAE/LTE access system, an LAF may be co-located with the respective UPE in the access gateway, since the UPE already stores a context related to the user device UE which could be extended with attachment related information as described above. Parameters stored in the UPE particularly comprise parameters of the basic IP bearer service and network internal routing information. With respect to a 2G/3G access system, the local attachment function could be co-located with the SGSN or SGSN/GGSN for the same reasons as for the aforementioned SAE/LTE access system (SGSN = Serving GPRS Support Node; GGSN = Gateway GPRS Support Node).

The functions performed by the above mentioned R reference point can be summarized as follows:
The reference point is located between the local attachment function or local attachment functions and the intersystem attachment decicion function. The R reference point enables the registration of the local attachment functions LAF and the parallel network attachment initiation via these LAFs at the intersystem attachment decision function. The R reference point supports the following functions between the local attachment function and the intersystem attachment decision function:
   - Initialization and maintenance of R connections.
   - Request for registering a local attachment function by sending a corresponding message LAF_Register_Req (message 7b in Fig. 2) which is thereafter confirmed or rejected by messages LAF_Register_Confirm (step 7d in Fig. 2) or LAF_Register_Reject (not shown in Fig. 2).
   - Request for initiating a parallel network attachment by sending the R message Parallel_Attachment_Req (step 7a in Fig. 3) which is thereafter confirmed or rejected by messages Parallel_Attachment_Req_Confirm (step 7c in Fig. 3) or Parallel_Attachment_Req_Reject (not shown in Fig. 3).

The above described invention has several benefits and advantages. Particularly, parallel network attachment can be achieved being a basis building block for efficient usage of mobile access network resources. The efficiency will be improved by allowing the parallel access to utilize the specific characteristics of the mobile access technologies. Furthermore, parallel network attachment can be seen as the basis building block for new, innovative user applications, like multimedia services. The intersystem attachment mobility architecture according to the invention supports application delivery over different accesses to match the requirements of the components of the application with respect to properties like QoS, security and bandwidth. The intersystem attachment management architecture according to the invention supports a stepwise deployment, hence protecting operator's investments by means of smooth integration in existing 3GPP structures and procedures. Hence, mobile network operators will decrease their capital expenditure by applying the proposed intersystem attachment management architecture as a solution applicable for all mobile access networks.

## Claims

1. A method for implementing a parallel network attachment functionality for a user device (UE) in a mobile telecommunications system, wherein the parallel network attachment functionality enables a simultaneous attachment of the user device (UE) to at least two mobile access networks (AN1, AN2) comprising a first mobile access network connected via a first access gateway (AG1, AG2)) to a core network (CN) and a second mobile access network connected via a second access gateway (AG1, AG2) to the core network (CN), wherein during the first network attachment of the user device (UE) to the first mobile access network (AN1, AN2) the following steps are performed:
a) the user device (UE) requests an attachment to the first mobile access network (AN1, AN2);
b) a first local attachment entity (LAF1, LAF2) assigned to the first mobile access network (AN1, AN2) registers as a serving local attachment entity (LAF1, LAF2) for the user device (UE) in an attachment decision entity (ISADF) located in the core network (CN);
c) the attachment decision entity (ISADF) registers as a serving attachment decision entity for the user device (UE) in a home subscriber entity (HSS) managing the subscriber data of the user device (UE);
d) the home subscriber entity (HSS) transfers data to the attachment decision entity (ISADF), the data concerning the authorisation and the control of the parallel network attachment of the user device (UE);
e) in case that a parallel network attachment is allowed for the user device (UE) according to the data transferred in step d), the attachment decision entity (ISADF) sends a message confirming the registration of the first local attachment entity (LAF1, LAF2) performed in step b) to the first local attachment entity (LAF1, LAF2);
f) a bearer service between the user device (UE) and the core network (CN) is established via the first mobile access network (AN1, AN2), the first access gateway (AG1, AG2) and the first local attachment entity (LAF1, LAF2).

2. The method according to claim 1, wherein step a) includes the following steps:
- the user device (UE) discovers the first mobile access network (AN1, AN2) and selects the first access gateway (AG1, AG2) and the first local attachment entity (LAF1, LAF2) for network attachment;
- the user device (UE) sends a network attachment request to the first mobile access network (AN1, AN2) which forwards the network attachment request to the first access gateway (AG1, AG2) and the first local attachment entity (LAF1, LAF2).

3. The method according to claim 1 or 2, wherein the method includes the following step:
- the user device is authenticated in the first access gateway (AG1, AG2) and in the first local attachment entity (LAF1, LAF2).

4. The method according to one of the preceding claims, wherein the method includes the following step:
- the first access gateway (AG1, AG2) and the first local attachment entity (LAF1, LAF2) register as serving the user device (UE) in the home subscriber entity (HSS).

5. The method according to one of the preceding claims, wherein, in case that a parallel network attachment is not allowed for the user device (UE) according to the data transferred in step d), the attachment decision entity (ISADF) sends in step e) a message refusing the registration of the first local attachment entity (LAF1, LAF2) performed in step b) to the first local attachment entity (LAF1, LAF2).

6. The method according to one of the preceding claims, wherein the mobile telecommunications system includes a mobility anchor (ISMA) in the core network (CN) for enabling a change of the user device (UE) during data transmission from a former mobile access network (AN1, AN2) to a new mobile access network (AN1, AN2) and wherein the first network attachment of the user device (UE) refers to such a change.

7. The method according to claim 6, wherein the bearer service is established in step f) between the user device (UE) and the mobility anchor (ISMA) in the core network (CN).

8. The method according to claim 6 or 7, wherein in step a), upon an attachment request of the user device (UE) to the first mobile access network (AN1, AN2) being the new access network, the first local attachment entity (LAF1, LAF2) requests and receives context information including the identity of the attachment decision entity (ISADF) from the access gateway and the local attachment entity of the former mobile access network.

9. The method according to claim 8, wherein in step b) the attachment decision entity (ISADF) according to the identity included in the context information is used for registration.

10. The method according to one of claims 1 to 8, wherein in step b) an attachment decision entity (ISADF) according to predefined information in the user device (UE) is used for registration.

11. The method according to one of the preceding claims, wherein the first local attachment entity (LAF1, LAF2) and the attachment decision entity (ISADF) communicate via a reference point, particularly via a physical interface.

12. The method according to one of the preceding claims, wherein the first and/or the second mobile access networks are 3PPP networks.

13. The method according to claim 12, wherein the 3GPP networks comprise a GSM access network and/or a UMTS access network and/or a SAE/LTE access network.

14. The method according to one of the preceding claims, wherein the first and/or the second mobile access networks are non 3GPP networks, particularly an interworking WLAN network.

15. A method for performing a parallel network attachment of a user device (UE) to several mobile access networks (AN1, AN2), wherein the parallel network attachment functionality is implemented by a method according to one of the preceding claims, and wherein during the network attachment of the user device (UE) to the second mobile access network (AN1, AN2) the following steps are performed:
i) the user device (UE) having an established bearer service via the first mobile access network (AN1, AN2) requests a parallel network attachment to the second mobile access network (AN1, AN2);
ii) the second access gateway (AG1, AG2) and a second local attachment entity (LAF1, LAF2) assigned to the second mobile access network (AN1, AN2) request and receive context information including the identity of the serving attachment decision entity (ISADF) for the user device (UE) from the first access gateway (AG1, AG2) and the first local attachment entity (LAF1, LAF2);
iii) the second local attachment entity (LAF1, LAF2) sends a parallel network attachment request to the serving attachment decision entity (ISADF) for the user device (UE);
iv) the serving attachment decision entity (ISADF) requests an authorization for the parallel network attachment from the home subscriber entity (HSS) of the user device (UE);
v) in case that an authorization for the parallel network attachment is given in response to the request in step iv), the serving attachment decision entity (ISADF) sends a message confirming the parallel network attachment request sent by the second local attachment entity (LAF1, LAF2) in step iii) to the second local attachment entity (LAF1, LAF2);
vi) a parallel bearer service between the user device (UE) and the core network (CN) is established via the second mobile access network (AN1, AN2), the second access gateway (AG1, AG2) and the second local attachment entity (LAF1, LAF2).

16. The method according to claim 15, wherein step i) includes the following steps:
- the user device (UE) discovers the second mobile access network (AN1, AN2) and selects the second access gateway (AG1, AG2) and the second local attachment entity (LAF1, LAF2) for parallel network attachment;
- the user device (UE) sends a parallel network attachment request to the second mobile access network (AN1, AN2) which forwards the parallel network attachment request to the second access gateway (AG1, AG2) and the second local attachment entity (LAF1, LAF2).

17. The method according to claim 15 or 16, wherein the method includes the following step:
- the user device (UE) is authenticated in the second access gateway (AG1, AG2) and in the second local attachment entity (LAF1, LAF2).

18. The method according to one of claims 15 to 17, wherein the method includes the following step:
- the second access gateway (AG1, AG2) and the second local attachment entity (LAF1, LAF2) register as serving the user device (UE) in the home subscriber entity (HSS).

19. The method according to one of claims 15 to 18, wherein, in case that an authorization for the parallel network attachment is not given in response to the request in step iv), the serving attachment decision entity (ISADF) sends in step v) a message refusing the parallel network attachment request sent by the second local attachment entity (AF1, LAF2) in step iii) to the second local attachment entity (LAF1, LAF2), whereupon the method is terminated.

20. The method according to one of claims 15 to 19, wherein the mobile telecommunications system includes a mobility anchor (ISMA) in the core network (CN) for enabling a change of the user device (UE) during data transmission from a former mobile access network (AN1, AN2) to a new mobile access network (AN1, AN2) and wherein the parallel bearer service is established between the user device (UE) and the mobility anchor (ISMA) in the core network (CN).

21. The method according to one of claims 15 to 20, wherein the second local attachment entity (LAF1, LAF2) and the attachment decision entity (ISADF) communicate via a reference point, particularly via a physical interface.

22. A mobile telecommunications system comprising the following components:
- a user device (UE);
- a first mobile access network (AN1, AN2) connected via a first access gateway (AG1, AG2) to a core network (CN);
- a second mobile access network (AN1, AN2) connected via a second access gateway (AG1, AG2) to the core network (CN);
- a first local attachment entity (LAF1, LAF2) assigned to the first mobile access network (AN1, AN2);
- a second local attachment entity (LAF1, LAF2) assigned to the second mobile access network (AN1, AN2);
- an attachment decision entity (ISADF) located in the core network (CN);
- a home subscriber entity managing the subscriber data of the user device (UE);
- wherein the components of the telecommunications system are adapted such that a method according to one of the preceding claims can be performed in the telecommunications system.

23. The telecommunications system according to claim 22, wherein the first and second local attachment entities (LAF1, LAF2) are adapted to communicate with the attachment decision entity (ISADF) via a reference point, particularly a physical interface.

24. The telecommunications system according to claim 22 or 23, wherein the first local attachment entity (LAF1, LAF2) is co-located with the first access gateway (AG1, AG2) and/or the second local attachment entity (LAF1, LAF2) is co-located with the second access gateway (AG1, AG2).

25. The telecommunications system according to one of claims 22 to 24, wherein the attachment decision entity (ISADF) is co-located with the home subscriber entity (HSS).

26. The telecommunications system according to one of claims 22 to 25, wherein the mobile telecommunications system includes a mobility anchor (ISMA) in the core network (CN) for enabling a change of the user device (UE) during data transmission from a former mobile access network (AN1, AN2) to a new mobile access network (AN1, AN2), the attachment decision entity (ISADF) preferably being co-located with the mobility anchor (ISMA).
